# EUROPÄISCHE PATENTANMELDUNG

(11) **EP 4 494 436 A1**
(43) Veröffentlichungstag der Anmeldung: **22.01.2025**
(21) Anmeldenummer: 24187072.4
(22) Anmeldetag: 08.07.2024
(51) Int. Cl.: A01B 63/111, A01M 7/00

(54) **TECHNIK ZUR ERMITTLUNG EINER GELÄNDEKONTUR UND ZUR HÖHENSTEUERUNG FÜR EINE LANDWIRTSCHAFTLICHE VERTEILMASCHINE MIT EINEM VERTEILGESTÄNGE**

(30) Priorität: 20.07.2023 DE 102023119205
(71) Anmelder: HORSCH LEEB Application Systems GmbH, 94405 Landau an der Isar (DE)
(72) Erfinder: Zink, Florian, 94405 Landau an der Isar (DE)
(74) Vertreter: v. Bezold & Partner Patentanwälte - PartG mbB

(57) **Zusammenfassung**

Die Erfindung betrifft Verfahren zur Ermittlung einer in Fahrtrichtung einer landwirtschaftlichen Verteilmaschine vorausliegenden Geländekontur Das Verfahren umfasst ein Ermitteln (S12) eines Referenz-Abstandes (LO) des Verteilgestänges (10) von einer Referenz-Messstelle (S0) einer Zielfläche (Z), beispielsweise einer Boden- oder Bestandsoberfläche und ein Ermitteln (S14) eines Abstandes (Li) des Verteilgestänges (2) von einer in Fahrtrichtung (F) der Verteilmaschine vorausliegend zur Referenz-Messstelle (S0) angeordneten Messstelle (Si) der Zielfläche. Das Verfahren umfasst ferner ein Referenzieren (S16), vorzugsweise durch Abgleichen und/oder in Relation setzen, des ermittelten Abstandes (Li) mit dem ermittelten Referenz-Abstand (LO) zum Ermitteln einer Veränderung der Geländekontur an der Messstelle (Si) relativ zur Referenz-Messstelle (S0). Die Erfindung betrifft ferner ein Verfahren zur Höhensteuerung einer solchen Verteilmaschine. Die Erfindung betrifft ferner eine landwirtschaftliche Verteilmaschine mit einem Verteilgestänge und eine Steuervorrichtung zur Höhensteuerung eines Verteilgestänges einer solchen Verteilmaschine.

## Beschreibung

Die Erfindung betrifft Verfahren zur Ermittlung einer in Fahrtrichtung einer landwirtschaftlichen Verteilmaschine vorausliegenden Geländekontur und ein Verfahren zur Höhensteuerung einer solchen Verteilmaschine. Die Erfindung betrifft ferner eine landwirtschaftliche Verteilmaschine und eine Steuervorrichtung zur Höhensteuerung eines Verteilgestänges einer solchen Verteilmaschine.

Aus dem Stand der Technik ist es bekannt, derartige landwirtschaftliche Verteilmaschinen (nachfolgend auch kurz als Verteilmaschinen bezeichnet) für die gleichmäßige Verteilung flüssiger und/ oder fester landwirtschaftlicher Wirkstoffe auf eine zu behandelnde landwirtschaftliche Fläche zu verwenden. Derartige Verteilmaschinen weisen zur Erreichung einer möglichst großen Schlagkraft ein sich in großer Breite quer zu einer Fahrtrichtung der Verteilmaschine ersteckendes Verteilgestänge auf. Zur Verteilung der jeweiligen Wirkstoffe sind am Verteilgestänge Verteilelemente wie z. B. Spritzdüsen, Prallelemente oder dergl. angebracht.

Beim Ausbringen soll der Abstand zwischen dem Verteilgestänge und dem Feldboden oder dem Pflanzenbestand über die gesamte Arbeitsbreite möglichst konstant bleiben. Zur Lagesteuerung des Verteilgestänges, insbesondere zur Höhenverstellung gegenüber einem Pflanzenbestand, ist es aus dem Stand der Technik bekannt, das Verteilgestänge mittels einer Stellvorrichtung höhenverstellbar am Trägerfahrzeug zu haltern.

Zur Erfassung der Höhenlage im Rahmen der Höhensteuerung des Verteilgestänges ist es aus dem Stand der Technik ferner bekannt, am Verteilgestänge in Richtung zum Pflanzenbestand orientierte, d. h. im Wesentlichen senkrecht nach unten gerichtete, Ultraschallsensoren vorzusehen, mit denen ein Ist-Abstand des Verteilgestänges zum Pflanzenbestand bzw. zur Ackerfläche erfasst werden kann.

Bekannte Systeme zur Höhensteuerung des Verteilgestänges, die solche Ultraschallsensoren verwenden, haben jedoch den Nachteil, dass die Lagesteuerung des Verteilgestänges oftmals zu spät auf sich ändernde Höhenabstände zwischen Verteilgestänge und Pflanzenbestand reagieren kann. Der Grund ist die vergleichsweise lange Systemreaktionszeit, d. h. die Zeit, die zwischen einer Erfassung der Höhenlage und einer tatsächlichen Anpassung, d. h. einer Veränderung der Lage des Verteilgestänges vergeht. Diese Reaktionszeit wird beispielsweise beeinflusst durch die vergleichsweise hohe Massenträgheit des Gestänges, die Reaktionszeit der Stellvorrichtung, z. B. einer Hydraulik hiervon, und der Verarbeitungszeit der Sensordaten.

Nimmt man hierfür lediglich beispielhaft eine Reaktionszeit von 1,2 s an, ergäbe sich bezogen auf eine Fahrgeschwindigkeit von z. B. 18km/h = 5 m/s somit eine Fahrstrecke von sechs Metern, bis die Regelung zur Erreichung der gewünschten Höhenlage beginnt bzw. bis diese Höhenlage erreicht wird. Die Anpassung erfolgt somit zu spät. Ferner kann sich innerhalb dieser sechs Meter Fahrstrecke die Höhenlage jedoch bereits wieder ändern, so dass im Ergebnis keine ausreichend genaue Anpassung der Lage des Verteilgestänges an sich ändernde Höhenabstände möglich ist. Aus der Praxis sind auch Ansätze bekannt, mittels einer Sensorvorrichtung eine vorausliegende Geländekontur der Zielfläche zu bestimmen und für eine Höhensteuerung des Verteilgestänges zu verwenden. Die bisher bekannten Techniken hierfür ermitteln die vorausliegende Geländekontur jedoch nicht ausreichend genau im Hinblick auf Anwendungen zur Lagesteuerung des Verteilgestänges.

Es ist somit eine Aufgabe der Erfindung, eine verbesserte Technik zur Anpassung einer Lage eines Verteilgestänges an sich verändernde Höhenabstände zu einem Gelände bereitzustellen, mit der Nachteile herkömmlicher Techniken vermieden werden können.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Ein erster Aspekt der vorliegenden Offenbarung betrifft ein Verfahren zur Ermittlung einer in Fahrtrichtung einer landwirtschaftlichen Verteilmaschine vorausliegenden Geländekontur. Die landwirtschaftliche Verteilmaschine umfasst ein Verteilgestänge zum Ausbringen von Material und kann beispielsweise eine Feldspritze oder ein pneumatischer Düngerstreuer sein. Unter der Geländekontur kann ein Höhenprofil einer von der Verteilmaschine zu bearbeitenden Zielfläche verstanden werden. Die Zielfläche kann z. B. eine Boden- oder Bestandsoberfläche sein.

Das Verfahren umfasst ein Ermitteln eines Abstandes des Verteilgestänges von einer Referenz-Messstelle einer Zielfläche. Dieser Abstand wird nachfolgend als Referenz-Abstand bezeichnet. Das Verfahren umfasst ferner ein Ermitteln eines Abstandes des Verteilgestänges von mindestens einer (weiteren) Messstelle der Zielfläche, die in Fahrtrichtung der Verteilmaschine vorausliegend zur Referenz-Messstelle angeordnet ist. Der Referenz-Abstand des Verteilgestänges von der Referenz-Messstelle und der (weitere) Abstand des Verteilgestänges von der vorausliegenden Messstelle werden vorzugsweise jeweils gleichzeitig ermittelt. Der Referenz-Abstand des Verteilgestänges von der Referenz-Messstelle und der (weitere) Abstand des Verteilgestänges können ferner vorzugsweise jeweils ausgehend von einer festen Position des Verteilgestänges bzw. der Verteilmaschine ermittelt werden.

Das Verfahren umfasst ferner ein Referenzieren des ermittelten Abstandes mit dem ermittelten Referenz-Abstand zum Ermitteln einer Veränderung der Geländekontur an der Messstelle relativ zur Referenz-Messstelle, vorzugsweise zum Ermitteln eine Veränderung des vertikalen Abstandes des Verteilgestänges zur Zielfläche an der Referenz-Messstelle im Vergleich zur Messstelle.

Das Referenzieren des ermittelten Abstands mit dem ermittelten Referenzabstand kann ein Abgleichen und/oder in Relation setzen des ermittelten Abstands mit dem ermittelten Referenzabstand umfassen (oder durch ein solches Abgleichen und/oder in Relation setzen erfolgen).

Vorteilhaft ermöglicht das Verfahren eine Ermittlung einer vorausliegenden Veränderung der Geländekontur, so dass hierauf frühzeitig (rechtzeitig) im Rahmen einer Höhensteuerung des Verteilgestänges reagiert werden kann. Hierbei ermöglicht das Referenzieren, z. B. das Abgleichen und/oder in Relation setzen, des ermittelten Abstands zum Referenzabstand eine Erfassung von Abstands-Messwerten, anhand derer eine relative Veränderung der Geländekontur mit ausreichender Genauigkeit bestimmt werden kann. Das Referenzieren ermöglicht eine Relativbetrachtung zweier Messwerte zueinander, wodurch Geländeveränderungen genauer erfasst werden können. Das Verfahren ist besonders vorteilhaft, um mit einer am Verteilgestänge angeordneten Sensorvorrichtung eine vorausliegende Geländekontur zu ermitteln.

Vorzugsweise werden die vorgenannten Schritte (Ermitteln des Referenz-Abstandes, Ermitteln des Abstands und das Referenzieren der ermittelten Abstände zueinander) im Fahrbetrieb der Verteilmaschine fortlaufend, z. B. kontinuierlich oder in regelmäßigen Zeitabständen, durchgeführt, beispielsweise mit einer Abtastrate, die im Bereich von 1 bis 50 Hz liegt. Vorteilhaft kann die vorausliegende Geländekontur im Fahrbetrieb möglichst genau ermittelt werden.

Beispielsweise kann das Referenzieren ein Vergleichen eines vertikalen Anteils des Abstandes mit einem vertikalen Anteil des Referenz-Abstands umfassen. Das Vergleichen kann eine Subtraktion oder Differenzbildung der beiden vertikalen Anteile umfassen. Die Differenz der vertikalen Anteile ergibt die Veränderung des vertikalen Abstandes des Verteilgestänges zur Zielfläche an der Referenz-Messstelle im Vergleich zur Messstelle.

Zudem oder alternativ kann das Referenzieren des ermittelten Abstandes mit dem ermittelten Referenz-Abstand ein Ermitteln eines Vergleichsabstandes aus dem ermittelten Abstand und aus einem Winkel zwischen unterschiedlichen Messrichtungen des Abstands und des Referenz-Abstands umfassen, sowie ein anschließendes Vergleichen des Vergleichsabstandes mit dem Referenz-Abstand. Der Vergleichsabstand kann der auf die Messrichtung des Referenz-Abstands projizierte Anteil des Abstands sein (oder der auf die Richtung des Referenz-Abstandsvektors projizierte Anteil des Abstandsvektors). Aus dem Längenunterschied des projizierten Anteils zur Länge des Referenz-Abstands kann wiederum eine Veränderung des vertikalen Abstandes des Verteilgestänges zur Zielfläche an der Referenz-Messstelle im Vergleich zur Messstelle berechnet werden.

Der vorstehend genannte Winkel zwischen der Messrichtung des Abstands und der Messrichtung des Referenz-Abstands ist bekannt und konstant für jede Messstelle. Anders ausgedrückt ist der Winkel zwischen dem Abstandsvektor und dem Referenz-Abstandsvektor bekannt und konstant. Der Abstandsvektor und der Referenz-Abstandsvektor stehen somit über den Winkel zwischen ihnen in einem geometrischen Zusammenhang, z. B. in einem trigonometrischen oder Dreiecks-Zusammenhang. Das Referenzieren des ermittelten Abstandes mit dem ermittelten Referenz-Abstand zum Ermitteln einer Veränderung der Geländekontur an der Messstelle relativ zur Referenz-Messstelle kann somit basierend auf diesem geometrischen Zusammenhang erfolgen. Mit anderen Worten können die Messstelle, die Referenz-Messstelle und eine Sensor-Stelle, an der eine Sensorvorrichtung zur Erfassung des Referenz-Abstands und des Abstands an der Verteilmaschine, vorzugsweise am Verteilgestänge, angeordnet ist, Ecken einer geometrischen Figur, vorzugsweises eines Dreiecks, bilden. Hierbei umfasst das Referenzieren ein Abgleichen und/oder ein In-Relation-Setzen des Abstands zu dem Referenz-Abstand auf Basis der geometrischen Form, vorzugsweise des Dreiecks. Anhand der Messwerte erfasste Höhenänderungen können auf diese Weise schnell berechnet werden.

Bevorzugt umfasst die ermittelte Veränderung der Geländekontur eine ermittelte Steigung der Geländekontur und/oder einen ermittelten Verlauf der vorausliegenden Geländekontur. Dies ermöglicht eine bessere Erzeugung einer Sollkurve für die Höhensteuerung. Beispielsweise kann das Verfahren umfassen, dass einer zum Verteilgestänge vorausliegenden Geländekontur tatsächlich vorhandene Steigungen, z. B. Steigungswinkel, zugeordnet werden.

Beispielsweise kann der Referenz-Abstand ein vertikaler oder im Wesentlichen vertikaler Abstand des Verteilgestänges zur Zielfläche sein. Es wird betont, dass der Referenz-Abstand jedoch nicht notwendigerweise als vertikaler Abstand gemessen werden muss. Der Referenz-Abstand kann an einer Referenz-Messstelle, die z. B. schräg vor dem Verteilgestänge liegt, gemessen werden, solange diese näher am Verteilgestänge ist als die Messstelle.

Als Referenzgröße, mit der der ermittelte Abstand abgeglichen wird oder in Relation gesetzt wird, kann auch eine andere physikalische Größe verwendet werden, bspw. eine Beschleunigung oder eine Trajektorie.

In einer weiteren Ausführungsform umfasst das Ermitteln des Abstands und des Referenz-Abstandes ein Empfangen von Sensordaten einer Sensorvorrichtung zur Erfassung einer vorausliegenden Geländekontur. Hierbei ist die Sensorvorrichtung an der Verteilmaschine, vorzugsweise am Verteilgestänge, angeordnet. Besonders bevorzugt umfasst die Sensorvorrichtung einen Radarsensor. Der Vorteil eines Radarsensors ist, dass die Zielfläche an mehrere Messstellen gleichzeitig abgetastet werden kann. Der Radarsensor kann somit vorteilhaft gleichzeitig zur Ermittlung des Abstands als auch des Referenz-Abstandes verwendet werden. Die Sensordaten umfassen aktuelle Werte für den Abstand und den Referenz-Abstand, sowie optional den Winkel zwischen unterschiedlichen Messrichtungen des Abstands und des Referenz-Abstands.

In einer besonders bevorzugten Ausführungsform ist ein Sichtfeld der Sensorvorrichtung zur Erfassung der vorausliegenden Geländekontur in mehrere Messstellen, vorzugsweise Sektoren, unterteilt, die in Fahrtrichtung der Verteilmaschine unterschiedlich weit von dem Verteilgestänge beabstandet sind. Hierbei ist die Sensorvorrichtung dazu ausgebildet, für jede der Messstellen einen Abstand des Verteilgestänges zu der Zielfläche zu bestimmen. Gemäß dieser Ausführungsform wird mindestens einer der mehreren Abstände zum Referenzieren mit dem ermittelten Referenz-Abstand verwendet. Die Genauigkeit der Erkennung der vorausliegenden Geländekontur kann dadurch verbessert werden.

Gemäß einer weiteren Ausführungsvariante kann z. B. aus den mehreren Abständen ein Abstand abhängig von einer aktuellen Geschwindigkeit ausgewählt und zum Referenzieren mit dem ermittelten Referenz-Abstand verwendet werden. Die aktuelle Geschwindigkeit kann hierbei z. B. eine aktuelle Fahrgeschwindigkeit der Verteilmaschine sein. Alternativ kann die aktuelle Geschwindigkeit eine aktuelle Bewegungsgeschwindigkeit der Sensorvorrichtung sein, die bei Kurvenfahrten und nichtmittiger Anordnung der Sensorvorrichtung am Verteilgestänge von der Fahrgeschwindigkeit abweichen kann.

Beispielsweise kann die Auswahl des Abstands abhängig von der aktuellen Geschwindigkeit derart erfolgen, dass je höher die aktuelle Geschwindigkeit ist, desto weiter beabstandet zur Referenz-Messstelle die Messstelle des ausgewählten Abstands ist. Dies bietet den Vorteil, dass bei hoher aktueller Geschwindigkeit eine weiter in Fahrtrichtung vorausliegende Messstelle gewählt wird, was im Hinblick auf die hohe Geschwindigkeit mehr Zeit für eine Anpassung der Höhenlage des Verteilgestänges an die an der Messstelle erkannte Änderung der Geländekontur ermöglicht. Bei geringerer aktueller Geschwindigkeit kann eine weniger weit beabstandete Messstelle gewählt werden, da eine geringere Geschwindigkeit eine längere Reaktionszeit für die Höhensteuerung ermöglicht. Gleichzeitig kann die vorausliegende Änderung der Geländekontur umso genauer erkannt werden, desto näher die vorausliegende Messstelle ist.

Zudem oder alternativ kann die Auswahl des Abstands abhängig von der aktuellen Geschwindigkeit derart erfolgen, dass s *≥ v* t,* wobei s einer Entfernung in Fahrtrichtung der Messstelle des ausgewählten Abstands vom Verteilgestänge (somit der horizontalen Entfernung bei Fahrten in der Ebene), v der aktuellen Geschwindigkeit, z.B. der aktuellen Fahrgeschwindigkeit der Verteilmaschine, und t einer Reaktionszeit der Verteilmaschine zur Höhenverstellung entspricht. Hierdurch kann sichergestellt werden, dass unter Berücksichtigung der erforderlichen Reaktionszeit der Verteilmaschine zur Höhenverstellung genügend Zeit bleibt, um das Verteilgestänge auf eine neue Sollhöhe einzustellen, die abhängig von der vorausliegend bestimmten Änderung der Geländekontur bestimmt wurde

Gemäß einer weiteren Ausführungsform werden der Abstand und der Referenzabstand mittels des gleichen Sensors der Sensorvorrichtung, vorzugsweise mittels eines Radarsensors, erfasst. Dies ermöglicht ein besonders zuverlässiges Abgleichen bzw. in Relation setzen der Messwerte zum Abstand und Referenz-Abstand.

Alternativ hierzu kann der Abstand mittels eines ersten Sensors, z. B. einem Fernbereich-Sensor, und der Referenz-Abstand mittels eines zweiten Sensors, z. B. einem Nahbereich-Sensor, erfasst werden. Der erste Sensor (Fernbereich-Sensor) ist bevorzugt ein Radarsensor. Der zweite Sensor (Nahbereich-Sensor) ist bevorzugt ein Ultraschallsensor. Diese Ausführungsvariante bietet den Vorzug, dass ein üblicherweise bereits vorhandener Ultraschallsensor als Nahbereich-Sensor genutzt werden kann, während das Sichtfeld des Fernbereich-Sensors fokussierter auf die vorausliegende/n Messstelle/n gerichtet werden kann.

Gemäß einer weiteren Ausführungsform wird eine Längsneigung der Verteilmaschine zur Fahroberfläche und/oder zur Horizontalen ermittelt und bei der Ermittlung des Referenz-Abstands und/oder des Abstands des Verteilgestänges als Korrekturgröße berücksichtigt. Vorteilhaft können entsprechend Längsneigungseffekte der Verteilmaschine, die die Position der vorausliegenden Messstelle verändern, berücksichtigt werden, um die Genauigkeit der Veränderung der Geländekontur zu verbessern.

Beispielsweise kann hierbei die Längsneigung der Verteilmaschine mittels eines Neigungssensors erfasst werden. Zudem oder alternativ hierzu kann hierbei die Längsneigung der Verteilmaschine mittels einer vertikalen oder im Wesentlichen vertikalen Abstandsmessung zur Zielfläche vor einer Vorderachse oder Zugdeichsel der Verteilmaschine und mittels einer weiteren vertikalen oder im Wesentlichen vertikalen Abstandsmessung zur Zielfläche hinter der Vorderachse oder hinter der Zugdeichsel der Verteilmaschine bestimmt werden.

Zudem oder alternativ kann die ermittelte Längsneigung zur Bestimmung einer Bergauf- oder Bergabfahrt und/oder zur Bestimmung von durch Bodenunebenheiten erzeugten Längsneigungen verwendet werden. Entsprechend können z. B. unterschiedliche Korrekturfaktoren bei der Berechnung einer vorausliegenden Veränderung der Geländekontur verwendet werden, je nachdem ob die Längsneigung durch eine Bergauf- oder Bergabfahrt oder durch Bodenunebenheiten erzeugt wurden.

Die verfahrensgemäß ermittelte Geländekontur kann vorteilhaft für eine Höhensteuerung des Verteilgestänges verwendet werden. Ein weiterer Aspekt der vorliegenden Offenbarung betrifft entsprechend ein Verfahren zur Höhensteuerung eines Verteilgestänges der landwirtschaftlichen Verteilmaschine.

Das Verfahren umfasst ein Ermitteln einer in Fahrtrichtung der Verteilmaschine vorausliegenden Geländekontur gemäß einem Verfahren zur Ermittlung einer in Fahrtrichtung einer landwirtschaftlichen Verteilmaschine vorausliegenden Geländekontur wie hierin beschrieben. Die hierin beschriebenen Aspekte und Merkmale betreffend das Verfahren zur Ermittlung der vorausliegenden Geländekontur sollen daher auch in Zusammenhang mit dem Verfahren zur Höhensteuerung offenbart und beanspruchbar sein - unabhängig voneinander und auch in Kombination.

Das Verfahren zur Höhensteuerung umfasst ferner ein Ermitteln, abhängig von der ermittelten Geländekontur, einer Sollkurve für die Höhensteuerung des Verteilgestänges, und ein Ansteuern einer Stellvorrichtung des Verteilgestänges zur Höhensteuerung des Verteilgestänges gemäß der ermittelten Sollkurve. Vorteilhaft wird eine bessere Höhensteuerung des Verteilgestänges bereitgestellt, bei der vorausliegende Geländekonturänderungen vorausschauend ermittelt und zur Höhensteuerung verwendet werden.

Zudem ist es möglich, dass, zum Verbessern der Höhensteuerung, dem Fahrzeug zudem ein Neigungssensor zugeordnet ist und wiederum die Werte des Neigungssensors mit den erfassten Höhenabständen abgeglichen werden. Somit kann insbesondere die Höhensteuerung dahingehend verbessert werden, da eine Auswertung erfolgt, ob das Spritzfahrzeug tatsächlich Bergauf- bzw. Bergab bewegt wird.

Eine weitere Ausführungsform des Verfahrens zur Höhensteuerung zeichnet sich dadurch aus, dass die anhand der vorausliegenden Geländekontur ermittelte Sollkurve für eine primäre, vorzugsweise initiale, Höhensteuerung des Verteilgestänges verwendet wird und (nur) der Referenz-Abstand anschließend für eine sekundäre Höhensteuerung als Nach- oder Feinsteuerung verwendet wird. Bei der primären, vorzugsweise initialen, Höhensteuerung werden somit sowohl der ermittelte Abstand und der ermittelte Referenz-Abstand verwendet; bei der sekundären Höhensteuerung als Nach- oder Feinsteuerung wird dann nur noch der Referenz-Abstand verwendet. Hierdurch kann die Höhensteuerung weiter verbessert werden. Einerseits wird im Hinblick auf die reaktionszeitbedingte Latenz der Höhensteuerung eine frühzeitige Anpassung der Höhenlage aufgrund der primären Höhensteuerung initiiert. Diese kann aufgrund der vorausschauend erfassten Geländekonturänderung mit Ungenauigkeiten behaftet sein, die dann jedoch mittels der Nach-oder Feinsteuerung korrigiert werden können.

Eine weitere Ausführungsform des Verfahrens zur Höhensteuerung zeichnet sich dadurch aus, dass Zeitpunkte zum Ansteuern der Stellvorrichtung des Verteilgestänges zur Höhensteuerung des Verteilgestänges gemäß der ermittelten Sollkurve so festgelegt sind, vorzugsweise abhängig von einer Fahrgeschwindigkeit der Verteilmaschine, dass eine Reaktionszeit der Stellvorrichtung bei der Höhensteuerung zumindest teilweise kompensiert wird, z. B. in dem die Stellsignale zur Höhensteuerung erzeugt werden, bevor das Verteilgestänge die Geländekonturänderung, d. h. die sich verändernden Höhenabstände, erreicht. Unter einer Reaktionszeit bei der Höhensteuerung kann die technisch bedingte Verzögerungszeit verstanden werden, die zwischen der sensorischen Erfassung einer Geländekonturänderung, z. B. eines sich ändernden Höhenabstands, und einer Anpassung der Lage des Verteilgestänges an die geänderte Höhenlage vergeht.

Vorstehend wurde bereits erwähnt, dass die Reaktionszeit vorliegend beispielsweise beeinflusst wird durch die Verarbeitungszeit der Sensordaten, die Reaktionszeit der Stellvorrichtung, z. B. eine diesbzgl. Reaktionszeit der Hydraulik bei hydraulischen Stellvorrichtungen, und die Massenträgheit des Verteilgestänges bzw. der maximalen Verstellgeschwindigkeit der Stellvorrichtung. Durch die vorausschauende Erfassung von sich ändernden Höhenabständen kann die Steuereinrichtung Stellsignale zur Anpassung an diese sich ändernden Höhenabstände erzeugen, bevor das Verteilgestänge einen geänderten Höhenabstand erreicht. Das vorausschauende Erkennen von (vorausliegenden) Geländekonturänderungen ermöglicht, dass die Zeitpunkte zur Ansteuerung der Stellvorrichtung so festgelegt werden können, dass die Reaktionszeit für die Anpassung an eine Geländekonturänderung zumindest teilweise, vorzugsweise vollständig, kompensiert werden kann.

Es ist möglich, dass bei einer Feldarbeit der Verteilmaschine (beispielsweise kontinuierlich) Höhen- und/oder Lageverstellungen des Verteilgestänges (z. B. zur Anpassung an verschieden hohe Pflanzenbestände und/oder zur Anpassung an die Geländekontur oder dergl.) ausgeführt werden (insbesondere mittels der Stellvorrichtung), was insbesondere dazu führen kann, dass der Referenz-Abstand sich (insbesondere dementsprechend) verändert.

Es ist möglich, dass der Referenz-Abstand einen (vorzugsweise zumindest streckenweise) im Wesentlichen konstant bleibenden Referenz-Abstand umfasst und/oder einen (vorzugsweise zumindest streckenweise) sich verändernden Referenz-Abstand (und vorzugsweise somit unterschiedliche und/oder sich verändernde Referenz-Abstände) umfasst.

Das Verfahren kann vorzugsweise ein Ermitteln eines (insbesondere zumindest streckenweise) im Wesentlichen konstanten Referenz-Abstands umfassen und/oder hierauf basieren. Alternativ oder ergänzend kann das Verfahren vorzugsweise ein Ermitteln eines (insbesondere zumindest streckenweise) sich verändernden Referenz-Abstands (und vorzugsweise somit unterschiedlicher und/oder sich verändernder Referenz-Abstände) umfassen und/oder hierauf basieren.

Das Referenzieren, vorzugsweise durch Abgleichen und/oder in Relation setzen, kann beispielsweise einen (insbesondere zumindest streckenweise) im Wesentlichen konstanten Referenz-Abstand umfassen und/oder beispielsweise auf einem (insbesondere zumindest streckenweise) im Wesentlichen konstanten Referenz-Abstand basieren.

Alternativ oder ergänzend kann beispielsweise das Referenzieren, vorzugsweise durch Abgleichen und/oder in Relation setzen, einen (insbesondere zumindest streckenweise) sich verändernden Referenz-Abstand (und somit vorzugsweise unterschiedliche und/oder sich verändernde Referenz-Abstände) umfassen, und/oder beispielsweise auf einem (insbesondere zumindest streckenweise) sich verändernden Referenz-Abstand (und somit vorzugsweise auf unterschiedlichen und/oder sich verändernden Referenz-Abständen) basieren.

Der sich verändernde Referenz-Abstand, vorzugsweise die sich verändernden Referenz-Abstände, kann/können beispielsweise durch zweckmäßig gesteuerte Höhen- und/oder Lageverstellungen des Verteilgestänges (z. B. mittels der Stellvorrichtung) erzeugt werden, insbesondere um einen im Wesentlichen konstanten Abstand des Verteilgestänges zu der Zielfläche zu erzielen, beispielsweise zu einer Boden- oder Bestandsoberfläche.

Es ist möglich, dass der sich verändernde Referenz-Abstand, vorzugsweise die sich verändernden Referenz-Abstände, sich beispielsweise zumindest streckenweise kontinuierlich verändern.

Das Referenzieren kann beispielsweise in Abhängigkeit davon erfolgen und somit vorzugsweise eine Überprüfung umfassen, ob sich der Referenz-Abstand (vorzugsweise zumindest streckenweise) verändert und/oder (vorzugsweise zumindest streckenweise) im Wesentlichen konstant bleibt. Basierend hierauf kann vorzugsweise ermittelt werden, ob und wenn ja wie sich der Abstand und/oder die Geländekontur ändert.

Die Stellvorrichtung kann vorzugsweise eingerichtet sein, um die Höhen- und/oder Lageverstellungen des Verteilgestänges auszuführen.

Ein weiterer Aspekt der vorliegenden Offenbarung betrifft eine Steuervorrichtung zur Höhensteuerung eines Verteilgestänges einer landwirtschaftlichen Verteilmaschine, die dazu ausgebildet ist, das Verfahren gemäß einem der vorherigen Ansprüche auszuführen. Die Steuervorrichtung kann als Steuergerät implementiert sein oder Teil der Funktionalität eines Steuergeräts ausführen. Vorzugsweise kann sich der Begriff "Steuervorrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Ein weiterer Aspekt der vorliegenden Offenbarung betrifft eine landwirtschaftliche Verteilmaschine, vorzugsweise eine Feldspritze oder ein pneumatischer Düngerstreuer. Die Verteilmaschine umfasst ein Verteilgestänge zum Ausbringen von Material, wie beispielsweise Düngemittel, Pflanzenschutzmittel oder Saatgut, umfassend ein Mittelteil und zwei seitliche Ausleger, die jeweils eine Mehrzahl von Ausbringelementen zum Ausbringen des Materials aufweisen. Die Verteilmaschine umfasst ferner eine ansteuerbare Stellvorrichtung, z.B. mindestens einen fluidbetätigten Stellzylinder, zur Veränderung einer Lage des Verteilgestänges relativ zu einer zu bearbeitenden landwirtschaftlichen Zielfläche. Die Verteilmaschine umfasst ferner eine Sensorvorrichtung, z. B. einen Radarsensor, zur Erfassung des Referenz-Abstandes und des Abstandes zur Zielfläche und eine Steuervorrichtung zur Höhensteuerung eines Verteilgestänges einer landwirtschaftlichen Verteilmaschine, wie hierin beschrieben. Die Steuervorrichtung steht in Signalverbindung mit der Sensorvorrichtung, um eingangsseitig Messdaten von der Sensorvorrichtung zu empfangen. Die Steuervorrichtung steht ferner in Signalverbindung mit der Stellvorrichtung, um Stellsignale zur Höhensteuerung an diese zu übermitteln.

Zur Vermeidung von Wiederholungen sollen verfahrensgemäß offenbarte Merkmale auch als vorrichtungsgemäß offenbart gelten und beanspruchbar sein und umgekehrt. Die vorgenannten Aspekte und erfindungsgemäßen Merkmale, insbesondere im Hinblick auf die Ausbildung des Verfahren gelten somit auch für die Vorrichtung, die ausgebildet ist, entsprechende Verfahrensschritte durchzuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine schematische Perspektivansicht einer Verteilmaschine gemäß einer Ausführungsform;
- Figur 1B: eine schematische Seitenansicht der Verteilmaschine aus Figur 1A;
- Figur 2A, B: schematische Illustrationen des Sichtbereichs der Sensorvorrichtung gemäß einer Ausführungsform;
- Figur 3A, 3B: schematische Illustrationen eines in Sektoren unterteilten Sichtbereichs der Sensorvorrichtung gemäß einer Ausführungsform;
- Figur 4A: ein Blockdiagram zur Illustration eines Verfahrens gemäß einer Ausführungsform;
- Figur 4B: ein Blockdiagram zur Illustration eines Verfahrens gemäß einer weiteren Ausführungsform;
- Figur 5A, 5B: schematische Illustrationen eines Abgleichens des Abstands und Referenz-Abstands zur Ermittlung einer Veränderung der Geländekontur gemäß einer Ausführungsform;
- Figur 6: eine schematische Illustration einer geschwindigkeitsabhängigen Auswahl der Messstelle gemäß einer Ausführungsform; und
- Figur 7: eine schematische Illustration eines Verfahrens und einer Verteilvorrichtung gemäß einer weiteren Ausführungsform.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

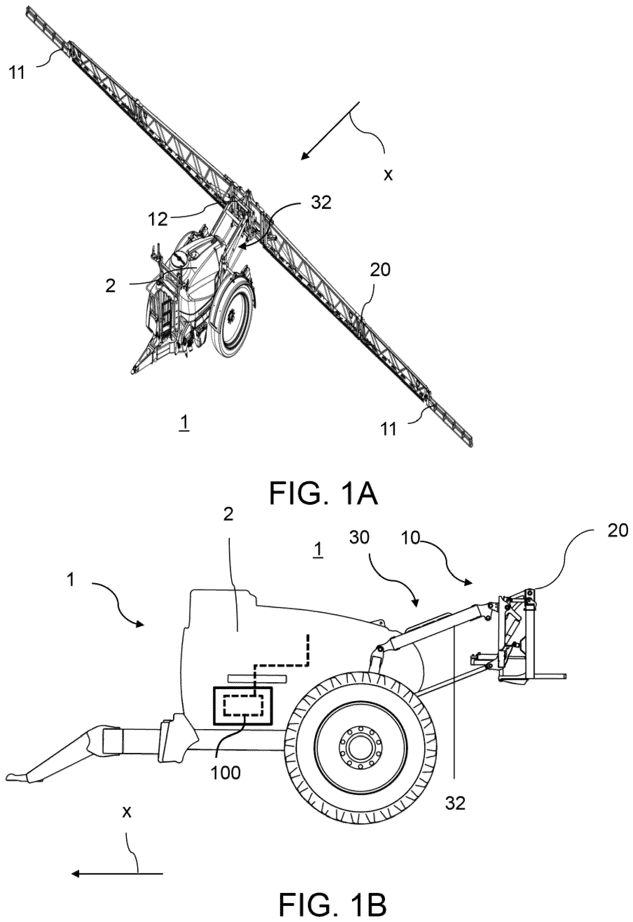

Die Figur 1A zeigt eine schematische Perspektivansicht einer Verteilmaschine gemäß einer Ausführungsform. Die Figur 1B zeigt eine schematische Seitenansicht der Verteilmaschine aus Figur 1A. Die Verteilmaschine 1 ist beispielhaft als gezogene Feldspritze ausgeführt, d. h. als eine mittels eines Zugfahrzeugs koppelbare bzw. gezogene landwirtschaftliche Feldspritze ausgebildet. Die Fahrtrichtung ist mit dem Pfeil x gekennzeichnet. Die Verteilmaschine 1 weist ein an einem Trägerfahrzeug 2 mittelbar oder unmittelbar gehaltertes Verteilgestänge 10 zum Ausbringen von Material, wie Düngemittel, Pflanzenschutzmittel oder Saatgut, auf. Das auszubringende Material ist im Falle einer Feldspritze eine Spritzflüssigkeit. Das Verteilgestänge 10 umfasst zwei seitliche Ausleger 11, die an ihrem inneren Ende schwenkbar an einem Mittelteil 12 befestigt sind und ein äußeres freies Ende aufweisen. Das Verteilgestänge 10 kann hierbei bspw. Arbeitsbreiten von mehr als 20 Metern aufweisen. Das Verteilgestänge 10 bzw. die Ausleger 11 können zumindest abschnittsweise durch eine fachwerkartige Gestängestruktur bzw. durch eine Fachwerkkonstruktion gebildet sein. Darüber hinaus weist die Gestängestruktur bzw. die Fachwerkkonstruktion eine größere Höhe als Tiefe auf.

Die zwei seitlichen Ausleger 11 und das Mittelteil 12 weisen jeweils eine Mehrzahl von Ausbringelementen zum Ausbringen des Materials auf, die z. B. in Längserstreckungsrichtung des Verteilgestänges beabstandet voneinander angeordnet sind. Die Ausbringelemente können jeweils als Spritzdüse ausgeführt sein (bei einer Feldspritze) oder z. B. als Prallteller (bei einem pneumatischen Düngerstreuer). Das Mittelteil 12 ist zur Einstellung seines Höhenabstands gegenüber einer zu bearbeitenden landwirtschaftlichen Zielfläche Z höhenverstellbar mittels einer Stellvorrichtung 30 zur Höhenverstellung des Mittelteils 12 am Trägerfahrzeug 2 gehaltert. Die Stellvorrichtung 30 zur Höhenverstellung des Mittelteils 12 kann z. B. hierzu einen höhenverstellbaren Hubrahmen umfassen, an dem das Mittelteil 12 gehaltert ist. Der Hubrahmen kann z. B. durch ein Parallelogrammgestänge in an sich bekannter Weise höhenverstellbar am Trägerfahrzeug 2 gehaltert sein. Die Stellvorrichtung 30 zur Höhenverstellung des Mittelteils 12 umfasst ferner z. B. zwei fluidisch betätigbare Stellzylinder 32, die sich am einen Ende am Trägerfahrzeug 2 und am anderen Ende am Hubrahmen abstützen. Mittels der Stellvorrichtung 30 kann somit das ganze Verteilgestänge zur Höhensteuerung hoch- und heruntergefahren werden. Die Stellvorrichtung kann z. B. weitere Stellzylinder aufweisen, die ausgebildet sind, die Ausleger 11 relativ zum Mittelteil 12 in einer Ebene senkrecht zur Fahrtrichtung x zu verschwenken.

Die Verteilmaschine 1 umfasst ferner eine Steuervorrichtung 100 zur Höhensteuerung des Verteilgestänges 10. Die Steuervorrichtung 100 ist dazu ausgebildet, Verfahren, wie sie nachfolgend beschrieben werden, auszuführen.

Die Verteilmaschine 1 umfasst ferner eine Sensorvorrichtung 20, z. B. angeordnet am Verteilgestänge 10, die dazu ausgebildet, sich ändernde Höhenabstände des Verteilgestänges 10 zu einer Zielfläche vorausschauend zu erfassen. Die Sensorvorrichtung 20 steht in Signalverbindung mit der Steuervorrichtung 100, um Sensordaten an diese zu übertragen.

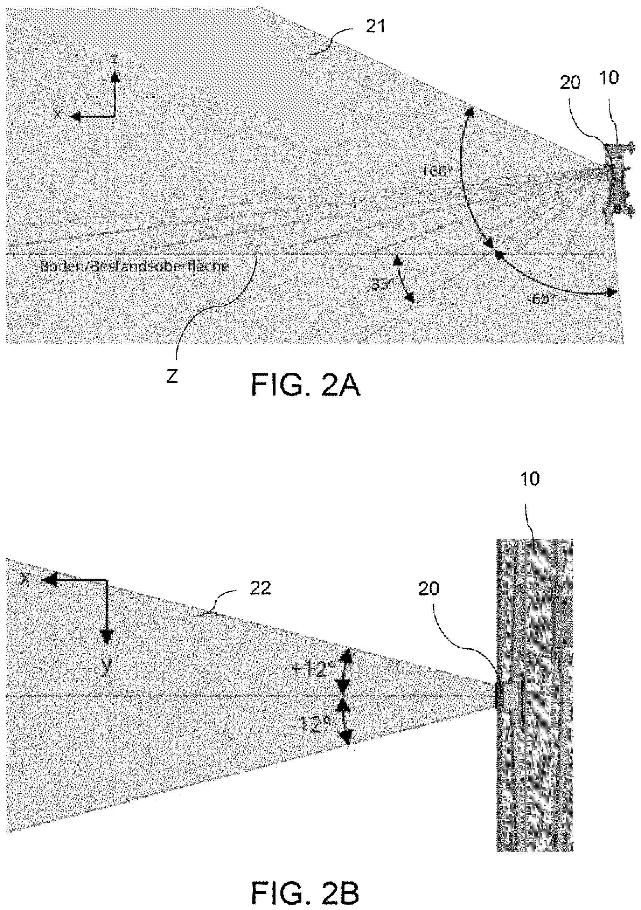

Die Figuren 2A bis 3B zeigen beispielhaft eine solche Sensorvorrichtung 20 und illustrieren deren Funktionsweise. Bei der Sensorvorrichtung 20 kann es sich um einen Radarsensor handeln, der am Verteilgestänge 10 angeordnet ist. Der Erfassungsbereich (Sichtbereich) der Sensorvorrichtung 20 ist in Fahrtrichtung x gerichtet und tastet in Fahrtrichtung x vorausliegend eine Zielfläche Z, z. B. eine Boden- oder eine Bestandsoberfläche, ab. Lediglich beispielhaft kann der vertikale Nutzbereich 21 der Sensorvorrichtung 20 einen Winkelbereich von 120° (vgl. Figur 2A) und der horizontale Nutzbereich 12 einen Winkelbereich von 24° (vgl. Figur 2B) umfassen.

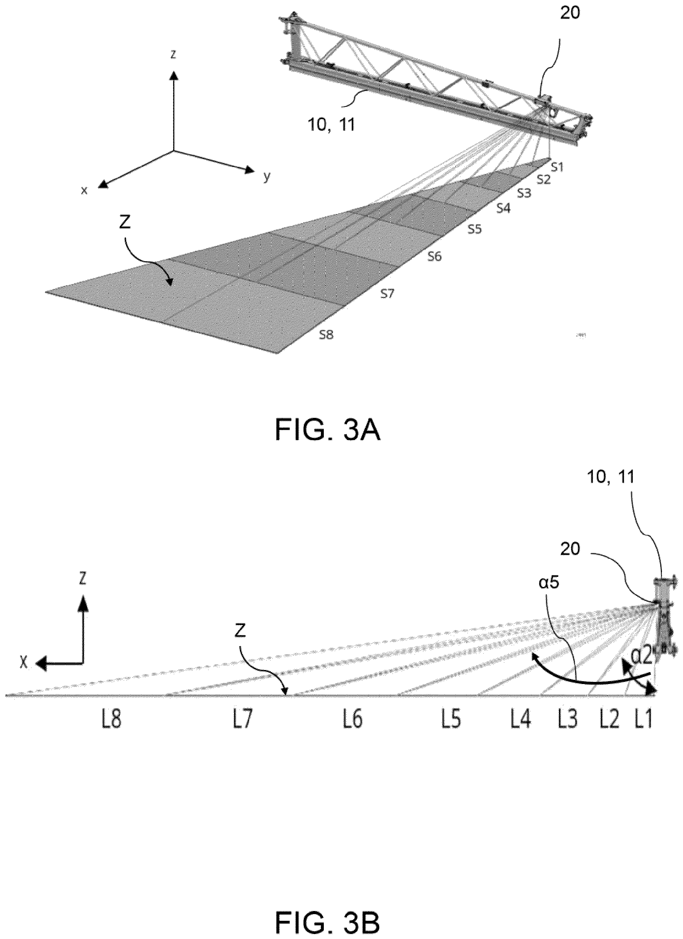

Wie in Figur 3A illustriert ist, kann dabei das Sichtfeld der Sensorvorrichtung 20 zur Erfassung der vorausliegenden Geländekontur optional in mehrere Messstellen S1-S8, beispielsweise in mehrere Sektoren S1-S8, unterteilt sein, die in Fahrtrichtung x der Verteilmaschine unterschiedlich weit von dem Verteilgestänge 10 und der Sensorvorrichtung 20 beabstandet sind. Beispielhaft ist das Sichtfeld hier in acht Sektoren S1-S8 unterteilt. Es können jedoch auch mehr oder weniger Sektoren sein. Die Sensorvorrichtung 20 ist z. B. an einem der seitlichen Ausleger 11 angeordnet, derart, dass das Trägerfahrzeug im Falle einer gezogenen Verteilmaschine 1 nicht das Sichtfeld der Sensorvorrichtung 20 beeinträchtigt.

Die Sensorvorrichtung 20 ist ausgebildet, mittels Radarstrahlen fortlaufend die Zielfläche abzutasten und anhand der von der Zielfläche Z zurückreflektierten Strahlen für jeden Sektor S1 bis S8 einen Abstand Li, i= 1...8 zu messen. Der Abstand Li gibt den Mittelwert des Abstands des Sektors Si von der Sensorvorrichtung 20 an, also die Länge der in Figur 3B gezeigten Strahlen. Da dem Abstand Li entsprechend auch eine Richtung zugeordnet ist, kann dieser auch als Abstandsvektor bezeichnet werden.

Die Sensorvorrichtung 20 berechnet somit einen mittleren Wert für den Abstand L1 bis L8 von der Sensorvorrichtung 20 zu jeder Messstelle S1-S8 bzw. zu jedem Sektor S1-S8, wobei die Abstände bevorzugt mit einer vorgegebenen Abtastrate berechnet werden. Die Abtastrate kann z. B. im Bereich von 1 bis 50 Hz liegen. Die Winkel αi; i=1...8 zwischen der Vertikalen und dem jeweiligen Messstrahl (Abstandsvektor) Li sind bekannt und bei jeder Messung gleich. Die vom Winkel αi abhängige Richtung der Abstände (Messstrahlen) Li wird als (Mess-)richtung des Abstandvektors Li bezeichnet.

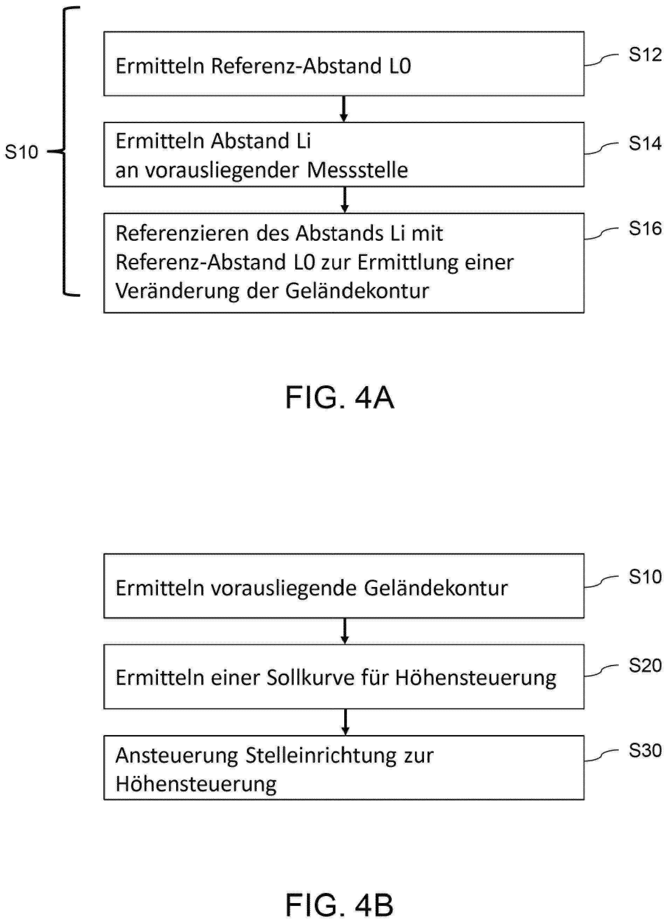

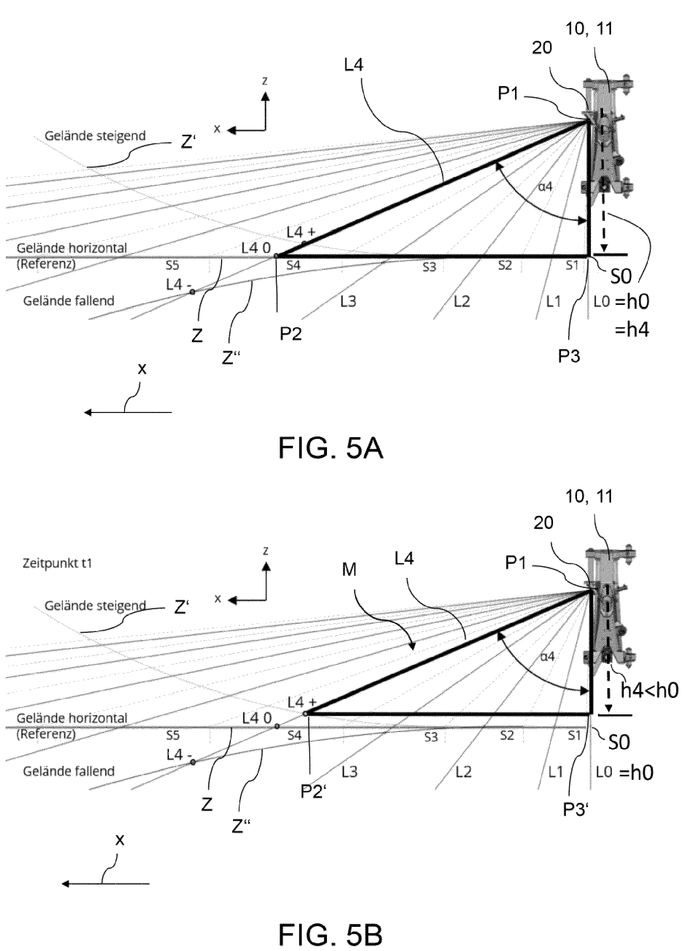

Die Figur 4A zeigt ein Blockdiagram zur Illustration eines Verfahrens S10 zur Ermittlung einer in Fahrtrichtung einer landwirtschaftlichen Verteilmaschine 1 vorausliegenden Geländekontur unter Verwendung von Messdaten der Sensorvorrichtung 20. Die Steuervorrichtung 100 kann ausgebildet sein, dass Verfahren S10 durchzuführen und hierzu die von der Sensorvorrichtung 20 erhaltenen Abstandsdaten entsprechend zu verarbeiten. Zur Erläuterung des Verfahrens S10 wird ferner Bezug genommen auf die Figuren 5A und 5B.

In Schritt S12 wird ein Abstand LO des Verteilgestänge von einer Referenz-Messstelle S0 einer Zielfläche Z ermittelt. Der Abstand LO wird nachfolgend als Referenz-Abstand bezeichnet. Wie in Figur 5A gezeigt ist, kann beispielhaft als Referenzmessstelle S0 eine Stelle der Zielfläche Z direkt unterhalb der Sensorvorrichtung gewählt sein. Der Messwert LO der Sensorvorrichtung 20, hier des Radarsensors, entspricht somit dem vertikalen Abstand h0 der Sensorvorrichtung 20 von der Zielfläche direkt unterhalb der Sensorvorrichtung bzw. des Verteilgestänges 10. Da die Montagehöhe der Sensorvorrichtung 20 relativ zur Unterkante des Verteilgestänges bekannt ist, kann auch der Abstand der Unterkante des Verteilgestänges zur Zielfläche Z berechnet werden.

Ferner wird zusätzlich ein Abstand des Verteilgestänges 10 und/oder der Sensorvorrichtung 20 von mindestens einer (weiteren) Messstelle der Zielfläche Z, die in Fahrtrichtung der Verteilmaschine vorausliegend zur Referenz-Messstelle angeordnet ist, ermittelt (Schritt S14). Als Messstellen kommen hier die Messstellen S1 bis S8 in Betracht. Der Radarsensor liefert zu jedem Abtastzeitpunkt Messerwerte (Abstände) für alle Messstellen S1 bis S8. Beispielhaft wird hiervon der Abstand L4 zur Messstelle S4 ausgewählt. Der Referenz-Abstand LO des Verteilgestänges und/oder der Sensorvorrichtung 20 von der Referenz-Messstelle S0 und der (weitere) Abstand L4 des Verteilgestänges und/oder der Sensorvorrichtung 20 von der vorausliegenden Messstelle S4 werden vom Radarsensor gleichzeitig ermittelt.

Der Abstand L4 entspricht dem Abstand der Sensorvorrichtung 20 zur Messstelle S4. Dies entspricht in Figur 5A der Länge der Linie, die die Punkte P1 und P2 bzw. L4_0 verbindet - falls die Zielfläche Z zwischen der Referenzmessstelle S0 und der Messstelle S4 keine Steigung aufweist. Dieser Fall ist in Figur 5A dargestellt. Figur 5A illustriert ferner eine Situation, in der das Gelände ansteigend wäre. Die entsprechende Zielfläche ist mit dem Bezugszeichen Z' gekennzeichnet. In diesem Fall würde die Sensorvorrichtung 20 einen kürzen Abstand zur Messstelle S4 messen. Der kürzere Abstand entspräche der Länge vom Punkt P1 zum Punkt L4+. Figur 5A illustriert ferner eine Situation, in der das Gelände abfallend wäre. Die entsprechende Zielfläche ist mit dem Bezugszeichen Z" gekennzeichnet. In diesem Fall würde die Sensorvorrichtung 20 einen längeren Abstand zur Messstelle S4 messen. Der längere Abstand entspräche der Länge vom Punkt P1 zum Punkt L4-.

In Figur 5B ist nun der Fall dargestellt, in dem die Zielfläche Z' zwischen der Referenzmessstelle S0\ und der Messstelle S4 eine Steigung aufweist. Entsprechend wird der Radarstrahl bereits am Punkt P2' bzw. L4+ reflektiert. Die Sensorvorrichtung misst entsprechend einen kürzen Abstand L4.

Zur Ermitteln einer Veränderung der Geländekontur an der Messstelle, z. B. der Messstelle S4, relativ zur Referenz-Messstelle S0 erfolgt durch ein Referenzieren des ermittelten Abstandes L4 mit dem ermittelten Referenz-Abstand LO (Schritt S16). Hierbei werden die ermittelten Abstandsgrößen (der Referenzabstand LO und der Abstand L4) so abgeglichen und/oder zueinander in Relation gesetzt, dass aus dem Vergleich eine Veränderung des vertikalen Abstandes des Verteilgestänges zur Zielfläche an der Referenz-Messstelle im Vergleich zur Messstelle berechnet werden kann.

Beispielsweise kann das Referenzieren ein Vergleichen eines vertikalen Anteils h4 des Abstandes L4 mit einem vertikalen Anteil h0 des Referenz-Abstands LO umfassen. Da der Referenz-Abstand LO vorliegend bereits als vertikaler Abstand gemessen ist, hat dieser nur einen vertikalen Anteil (L0=h0). Das Vergleichen kann eine Subtraktion oder Differenzbildung der beiden vertikalen Anteile umfassen.

Es ist möglich, dass bei der Feldarbeit der Verteilmaschine 1 (beispielsweise kontinuierlich) Höhen- und/oder Lageverstellungen des Verteilgestänges 10, zweckmäßig mittels der Stellvorrichtung 30, ausgeführt werden (z.B. zur Anpassung an verschieden hohe Pflanzenbestände und/oder zur Anpassung an die Geländekontur oder dergl.), was z. B. dazu führt, dass der Referenz-Abstand LO sich (vorzugsweise dementsprechend) verändern kann.

Das Ermitteln S12 kann somit ein Ermitteln eines (z. B. zumindest streckenweise) im Wesentlichen konstanten Referenz-Abstands LO und/oder eines (z. B. zumindest streckenweise) sich verändernden Referenz-Abstands LO umfassen und/oder hierauf basieren.

Das Referenzieren S16 kann beispielsweise einen (z. B. zumindest streckenweise) im Wesentlichen konstanten Referenz-Abstand LO umfassen und/oder (z. B. zumindest streckenweise) auf einem im Wesentlichen konstanten Referenz-Abstand LO basieren.

Alternativ oder ergänzend kann das Referenzieren S16 beispielsweise einen (z. B. zumindest streckenweise) sich verändernden Referenz-Abstand LO und somit (z. B. unterschiedliche und/oder sich verändernde) Referenz-Abstände LO umfassen und/oder hierauf basieren.

Der sich verändernde Referenz-Abstand LO, vorzugsweise die sich verändernden Referenz-Abstände LO, kann/können beispielsweise durch insbesondere gesteuerte Höhen- und/oder Lageverstellungen des Verteilgestänges 10 erzeugt werden, insbesondere um einen im Wesentlichen konstanten Abstand des Verteilgestänges 10 zu der Zielfläche zu erzielen, beispielsweise zu der Boden- oder Bestandsoberfläche.

Es ist möglich, dass das Referenzieren S16 beispielsweise in Abhängigkeit davon erfolgt und somit vorzugsweise eine Überprüfung umfasst, ob sich der Referenz-Abstand LO (vorzugsweise zumindest streckenweise) ändert und/oder (vorzugsweise zumindest streckenweise) im Wesentlichen konstant bleibt. Basierend hierauf kann vorzugsweise ermittelt werden, ob und wenn ja wie sich der Abstand Li und/oder die Geländekontur ändert.

In der in Figur 5A gezeigten Situation eines horizontal verlaufenden Gefälles ergibt sich, dass h4= h0 ist, so dass hieraus abgeleitet werden kann, dass sich das Höhenprofil des Geländes an der Messstelle S4 im Vergleich zur Messstelle S0 nicht ändert. Das Gelände verläuft z. B. horizontal.

In der in Figur 5B gezeigten Situation eines Geländes mit Steigung ergibt sich, dass h4 < h0 ist, so dass hieraus abgeleitet werden kann, dass sich das Höhenprofil des Geländes an der Messstelle S4 im Vergleich zur Messstelle S0 verändert hat, nämlich derart, dass der Höhenabstand des Verteilgestänges zum Gelände sich an der Messstelle S4 um den Betrag (h0 - h4) verringert hat.

Die Differenz der vertikalen Anteile ergibt die Veränderung des vertikalen Abstandes des Verteilgestänges zur Zielfläche an der Referenz-Messstelle im Vergleich zur Messstelle.

Da der Winkel α zwischen der Messrichtung des Abstands und der Messrichtung des Referenz-Abstands, bei der Messstelle S4 also der Winkel α4, bekannt und konstant ist, kann der vertikale Anteil h4 direkt aus dem Wert L4 mit dem Winkel α4 berechnet werden, z. B. h4 = cos (α4)* L4, also mit einer geeigneten trigonometrischen Formel.

Der Abstandsvektor und der Referenz-Abstandsvektor stehen über den Winkel α zwischen ihnen, hier z.B. der Winkel α4, in einem geometrischen Zusammenhang, z. B. in einem trigonometrischen oder Dreiecks-Zusammenhang. Das Referenzieren des ermittelten Abstandes mit dem ermittelten Referenz-Abstand zum Ermitteln einer Veränderung der Geländekontur an der Messstelle relativ zur Referenz-Messstelle kann somit basierend auf diesem geometrischen Zusammenhang erfolgen. Mit anderen Worten können die Messstelle, die Referenz-Messstelle und eine Sensor-Stelle, an der eine Sensorvorrichtung zur Erfassung des Referenz-Abstands und des Abstands an der Verteilmaschine, vorzugsweise am Verteilgestänge, angeordnet ist, Ecken einer geometrischen Figur M, vorzugsweise eines Dreiecks, bilden. Das entsprechende Dreieck ist in den Figuren 5A und 5B durch die fett gezeichneten Linien dargestellt. Hierbei umfasst das Referenzieren ein Abgleichen und/oder ein In-Relation-Setzen des Abstands zu dem Referenz-Abstand auf Basis der geometrischen Form, vorzugsweise des Dreiecks. Dies gilt auch dann, wenn z. B. der Referenz-Abstand nicht als Vertikaler-Abstand gemessen wird, sondern ebenfalls einen Winkel zur Vertikalen bildet. Beispielsweise könnte auch der Abstand L1 als Referenz-Abstand verwendet werden. Anhand der Messwerte erfasste Höhenänderungen können auf diese Weise schnell berechnet werden.

Vorzugsweise werden die vorgenannten Schritte (Ermitteln des Referenz-Abstandes, Ermitteln des Abstands und das Referenzieren der ermittelten Abstände zueinander) im Fahrbetrieb der Verteilmaschine fortlaufend, z. B. kontinuierlich oder in regelmäßigen Zeitabständen, durchgeführt, beispielsweise mit einer Abtastrate, die im Bereich von 1 bis 50 Hz liegt. Vorteilhaft kann die vorausliegende Geländekontur im Fahrbetrieb möglichst genau ermittelt werden.

Mit dem Verfahren gemäß Figur 4A können somit vorausliegende Veränderungen der Geländekontur vorausschauend und genau ermittelt werden, so dass hierauf frühzeitig (rechtzeitig) im Rahmen einer Höhensteuerung des Verteilgestänges reagiert werden kann.

In Figur 4B ist ein solches Verfahren zur Höhensteuerung eines Verteilgestänges der landwirtschaftlichen Verteilmaschine dargestellt. Die Steuervorrichtung 100 kann ausgebildet sein, dass Verfahren zur Höhensteuerung durchzuführen und hierzu die von der Sensorvorrichtung 20 erhaltenen Abstandsdaten entsprechend zu verarbeiten, sowie entsprechende Stellsignale zur Ansteuerung der Stellvorrichtung 30 auszugeben.

Das Verfahren umfasst zunächst in Schritt S10 ein Ermitteln einer in Fahrtrichtung der Verteilmaschine vorausliegenden Geländekontur. Dies kann z. B. gemäß der Schritte S12, S14 und S16 erfolgen. Das Verfahren zur Höhensteuerung umfasst ferner in Schritt S20 ein Ermitteln, abhängig von der ermittelten Geländekontur, einer Sollkurve für die Höhensteuerung des Verteilgestänges. Die Geländekontur kann ein Höhenprofil der vorausliegenden Zielfläche beschreiben. Wenn z. B das Verteilgestänge einen bestimmten Sollabstand zur Zielfläche einhalten soll, kann die Sollkurve abhängig von der ermittelten Geländekontur so festgelegt werden, dass die Sollkurve im Wesentlichen der Geländekontur folgt, jedoch unter Einhaltung des Sollabstands. Die Sollkurve kann also im Vergleich zur ermittelten Geländekontur um den Sollabstand in Vertikalrichtung versetzt sein.

In Schritt S30 erfolgt dann ein Ansteuern einer Stellvorrichtung 30 des Verteilgestänges 10 zur Höhensteuerung des Verteilgestänges gemäß der ermittelten Sollkurve. Hierzu können entsprechende Stellsignale zur Ansteuerung der Stellvorrichtung 30 erzeugt und ausgegeben werden.

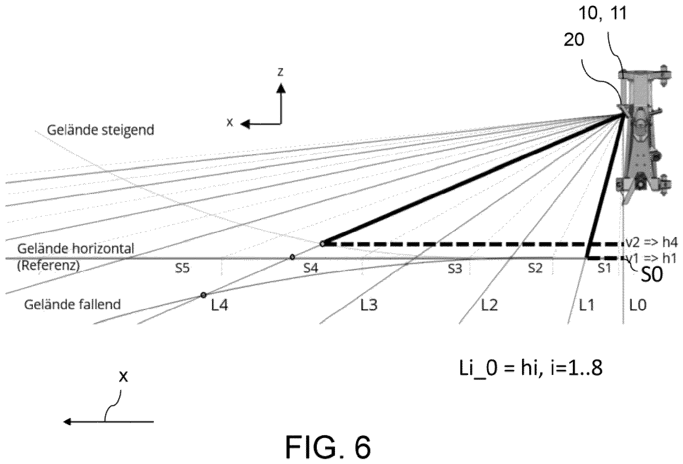

Figur 6 zeigt eine schematische Illustration einer geschwindigkeitsabhängigen Auswahl der Messstelle gemäß einer weiteren Ausführungsform.

Vorstehend wurde bereits festgestellt, dass die Sensorvorrichtung 20 zu jedem Messzeitpunkt gemäß der Abtastraste für alle Messstellen S1 bis S8 Abstandswerte ausgibt, von denen einer (oder mindestens einer) zum Referenzieren mit dem Referenz-Abstand LO ausgewählt wird. Beispielsweise kann aus den mehreren Abständen ein Abstand abhängig von einer aktuellen Geschwindigkeit ausgewählt werden. Die aktuelle Geschwindigkeit kann hierbei z. B. eine aktuelle Fahrgeschwindigkeit der Verteilmaschine sein.

Beispielsweise kann die Auswahl des Abstands abhängig von der aktuellen Geschwindigkeit derart erfolgen, dass je höher die aktuelle Geschwindigkeit ist, desto weiter beabstandet zur Referenz-Messstelle die Messstelle des ausgewählten Abstands ist bzw. ausgewählt wird. Dies bietet den Vorteil, dass bei hoher aktueller Geschwindigkeit eine weiter in Fahrtrichtung vorausliegende Messstelle gewählt wird, was im Hinblick auf die hohe Geschwindigkeit mehr Zeit für eine Anpassung der Höhenlage des Verteilgestänges an die an der Messstelle erkannte Änderung der Geländekontur ermöglicht. Bei geringerer aktueller Geschwindigkeit kann eine weniger weit beabstandete Messstelle gewählt werden, da eine geringere Geschwindigkeit eine längere Reaktionszeit für die Höhensteuerung ermöglicht, da es länger dauert, bis die Verteilmaschine eine erkannte, vorausliegende Geländekonturänderung erreicht. Gleichzeit kann die vorausliegende Änderung der Geländekontur umso genauer erkannt werden, desto näher die vorausliegende Messstelle ist.

Dies ist beispielhaft in Figur 6 dargestellt. Bei einer geringen Geschwindigkeit v1 kann z. B. die erste Messstelle S1 und der Abstand L1 verwendet werden. Die Geländekontur kann an der Messstelle S1 besonders genau ermittelt werden, weil der Abstandswert L1 sehr genaue Messwerte liefert. Es bleibt jedoch wenig Zeit, die Höhenlage des Verteilgestänges im Rahmen der Höhensteuerung anzupassen, falls anhand des Abstandswert L1 eine Veränderung der Geländekontur ermittelt wird. Aufgrund der (geringen) Geschwindigkeit v1 der Verteilmaschine bleibt hierzu auch unter Berücksichtigung der erforderlichen Systemreaktionszeit, ausreichend Zeit, um die Höhenlage anzupassen, bevor die Messstelle S1 erreicht wird.

Bei einer hohen Fahrgeschwindigkeit v2, v2 > v1, wird jedoch eine weiter vorausliegende Messstelle ausgewählt, hier lediglich beispielhaft die Messstelle S4 und der Abstandswert L4, um vorausliegende Konturänderungen zu ermitteln. Die Geländekontur kann an der Messstelle S4 zwar etwas weniger genau ermittelt werden als an der Messstelle S1. Der größere Abstand der Messstelle S4 ermöglicht jedoch auch bei der höheren Fahrgeschwindigkeit v2, dass die Höhenlage des Verteilgestänges im Rahmen der Höhensteuerung frühzeitiger, vorzugsweise vor Erreichen der Messstelle S4, angepasst werden kann, falls anhand des Abstandswert L4 eine Veränderung der Geländekontur ermittelt wird. Beispielsweise kann die Auswahl der Messstelle und/oder des Abstands abhängig von der aktuellen Geschwindigkeit derart erfolgen, dass s ≥ *v* * *t,* wobei s einer Entfernung in Fahrtrichtung der Messstelle des ausgewählten Abstands vom Verteilgestänge (somit der horizontalen Entfernung bei Fahrten in der Ebene), v der aktuellen Geschwindigkeit, z. B. Fahrgeschwindigkeit der Verteilmaschine, und t einer Reaktionszeit der Verteilmaschine zur Höhenverstellung entspricht. Hierdurch kann sichergestellt werden, dass unter Berücksichtigung der erforderlichen Reaktionszeit der Verteilmaschine zur Höhenverstellung genügend Zeit bleibt, um das Verteilgestänge auf eine neue Sollhöhe einzustellen, die abhängig von der bestimmten Änderung der vorausliegenden Geländekontur bestimmt wurde.

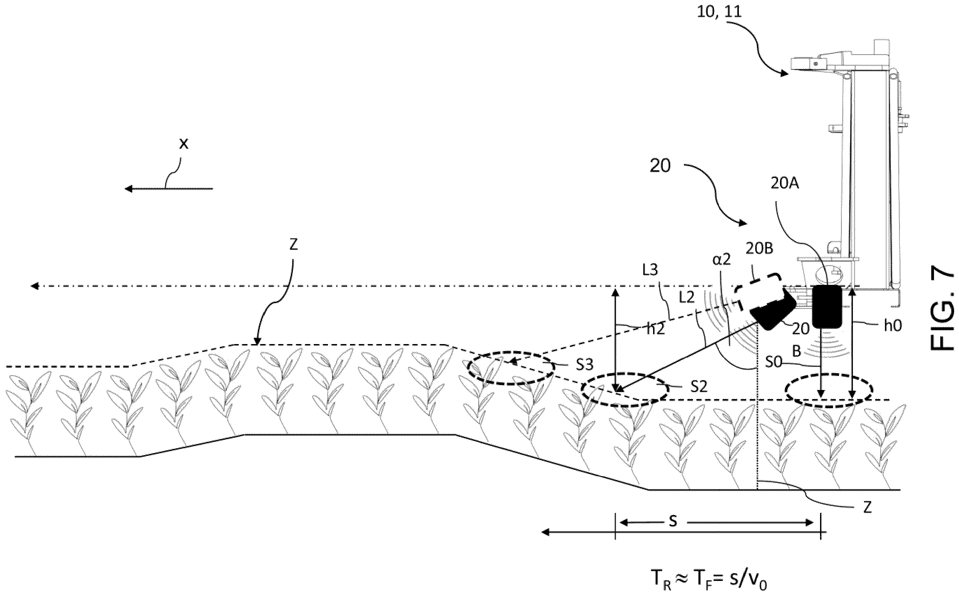

Figur 7 zeigt eine schematische Illustration eines Verfahrens und einer Verteilvorrichtung gemäß einer weiteren Ausführungsform. Es versteht sich, dass die unter Bezugnahme auf die Figur 7 beschriebenen Techniken und Merkmale mit den Techniken und Merkmalen, die unter Bezugnahme auf die vorherigen beschrieben sind, kombinierbar sind, einzeln oder in jeglicher Kombination.

Die Besonderheit des in Figur 7 illustrierten Ausführungsbeispiels ist, dass die Sensorvorrichtung 20 die Geländekontur an in Fahrtrichtung vorausliegenden Messstellen mittels eines ersten Sensors 20A, z. B. einem Fernbereich-Sensor, und der Referenz-Abstand mittels eines zweiten Sensors 20B, z. B. einem Nahbereich-Sensor, erfasst werden. Der Nahbereich-Sensor 20B kann ein Ultraschallsensor sein. Der erste Sensor (Fernbereich-Sensor) 20A ist bevorzugt ein Radarsensor. Zur Ermittlung einer Veränderung der Geländekontur an der Messstelle (Si) relativ zur Referenz-Messstelle S0 wird der mittels des ersten Sensors 20A ermittelte Abstand mit dem mittels des zweiten Sensors 20B ermittelten Referenz-Abstands referenziert, z. B. durch Abgleichen des vertikalen Anteils des Abstands mit dem vertikalen Anteil des Referenz-Abstands.

Der erste Sensor (Fernbereich-Sensor) kann optional wieder mehrere vorausliegende Messstellen S2 oder S3 abtasten (oder noch mehr wie z. B. in den Figuren 2A bis 3B beschrieben). Falls der erste Sensor (Fernbereich-Sensor) ein Ultraschallsensor ist, kann dieser hierzu verschwenkbar ausgeführt sein, was in Figur 7 skizziert ist.

Die vorausliegende Messstelle wird bevorzugt so ausgewählt, dass die Fahrzeit T_{F} bei aktueller Fahrgeschwindigkeit v0 bis zu der vorausliegenden Messstelle im Wesentlichen der Reaktionszeit T_{R} entspricht, d.h. T_{R} ≈ T_{F}= s/v₀, so dass bei Erreichen der Messstelle die Anpassung der Gestängelage an die veränderte Geländekontur abgeschlossen ist.

Wie vorstehend bereits festgestellt wurde, können die Verfahren zur Ermittlung einer in Fahrtrichtung einer landwirtschaftlichen Verteilmaschine 1 vorausliegenden Geländekontur und zur Höhensteuerung des Verteilgestänges 10 der Verteilmaschine 1 von der Steuervorrichtung 100 durchgeführt werden. Die Steuervorrichtung 100 empfängt Sensordaten der Sensorvorrichtung 20, ermittelt hieraus eine in Fahrtrichtung der Verteilmaschine 1 vorausliegende Geländekontur, z. B. gemäß der Schritte S12, S13 und S16 und führt eine Höhensteuerung des Verteilgestänges durch, z. B. gemäß der Schritte S10, S20 und S30.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 1: Landwirtschaftliche Verteilmaschine
- 2: Trägerfahrzeug
- 10: Verteilgestänge
- 11: Ausleger
- 12: Mittelteil
- 20: Sensorvorrichtung, z. B. Radarsensor
- 21: Vertikaler Nutzbereich (Sensor)
- 22: Horizontaler Nutzbereich (Sensor)
- 30: Stellvorrichtung
- 32: Stellzylinder
- 100: Steuervorrichtung
- S0: Referenz-Messstelle
- S1...S8: Messstellen, z. B. Sektoren des Sensorsichtfeldes
- L1...L8: Abstand (Mittelwert) für jeden Sektor S1-S8, Abstandsvektor
- h4: Vergleichsabstand
- α4: Winkel (Mittelwert)
- L0: Referenzabstand
- h0: Höhe der Sensorvorrichtung über Boden
- x: Fahrtrichtung
- P1: Position Sensorvorrichtung am Verteilgestänge
- P2, P3: Messstellen
- M: Geometrische Figur
- Z, Z', Z": Zielfläche, z.B. Boden- oder Bestandsoberfläche

- S10 - S30: Verfahrensschritte

## Patentansprüche

1. Verfahren (S10) zur Ermittlung einer in Fahrtrichtung einer landwirtschaftlichen Verteilmaschine (1) vorausliegenden Geländekontur, wobei die landwirtschaftliche Verteilmaschine (1), beispielsweise eine Feldspritze oder ein pneumatischer Düngerstreuer, ein Verteilgestänge (10) zum Ausbringen von Material aufweist, wobei das Ermitteln (S10) der vorausliegenden Geländekontur umfasst:
Ermitteln (S12) eines Referenz-Abstandes (LO) des Verteilgestänges (10) von einer Referenz-Messstelle (S0) einer Zielfläche (z), beispielsweise einer Boden- oder Bestandsoberfläche;
Ermitteln (S14) eines Abstandes (Li) des Verteilgestänges (10) von einer in Fahrtrichtung (F) der Verteilmaschine vorausliegend zur Referenz-Messstelle (S0) angeordneten Messstelle (Si) der Zielfläche; und
Referenzieren (S16), vorzugsweise durch Abgleichen und/oder in Relation setzen, des ermittelten Abstandes (Li) mit dem ermittelten Referenz-Abstand (LO) zum Ermitteln einer Veränderung der Geländekontur an der Messstelle (Si) relativ zur Referenz-Messstelle (S0).

2. Verfahren nach Anspruch 1, wobei das Referenzieren (S16) umfasst:
ein Ermitteln eines Vergleichsabstandes (h4) aus dem ermittelten Abstand (Li) und aus einem Winkel (αi) zwischen unterschiedlichen Messrichtungen des Abstands und des Referenz-Abstands, und ein Vergleichen des Vergleichsabstandes (hi) mit dem Referenz-Abstand (LO); und/oder
ein Vergleichen eines vertikalen Anteils (hi) des Abstandes mit einem vertikalen Anteil des Referenz-Abstands (h0).

3. Verfahren nach einem der vorherigen Ansprüche,
wobei die Messstelle (Si), die Referenz-Messstelle (S0) und eine Sensor-Stelle (P), an der eine Sensorvorrichtung zur Erfassung des Referenz-Abstands und des Abstands an der Verteilmaschine, vorzugsweise am Verteilgestänge, angeordnet ist, Ecken (P1, P2, P3) einer geometrischen Figur (M), vorzugsweises eines Dreiecks bilden, und
wobei das Referenzieren ein Abgleichen und/oder ein In-Relation-Setzen des Abstands (Li) zu dem Referenz-Abstand (LO) auf Basis der geometrischen Figur (M), vorzugsweise des Dreiecks, umfasst.

4. Verfahren nach einem der vorherigen Ansprüche,
wobei die ermittelte Veränderung der Geländekontur eine ermittelte Steigung der Geländekontur und/oder einen ermittelten Verlauf der vorausliegenden Geländekontur umfasst.

5. Verfahren nach einem der vorherigen Ansprüche,
wobei das Ermitteln des Abstands (Li) und des Referenz-Abstandes (LO) ein Empfangen von Sensordaten einer Sensorvorrichtung (20) zur Erfassung einer vorausliegenden Geländekontur umfasst, wobei die Sensorvorrichtung (20) an der Verteilmaschine (1), vorzugsweise am Verteilgestänge (10), angeordnet ist und vorzugsweise einen Radarsensor umfasst.

6. Verfahren nach Anspruch 5,
wobei ein Sichtfeld der Sensorvorrichtung zur Erfassung der vorausliegenden Geländekontur in mehrere Messstellen (S1-S8), vorzugsweise Sektoren (S1-S8), unterteilt ist, die in Fahrtrichtung der Verteilmaschine unterschiedlich weit von dem Verteilgestänge beabstandet sind,
wobei die Sensorvorrichtung dazu ausgebildet ist, für jede der Messstellen einen (L1-L8) Abstand des Verteilgestänges zu der Zielfläche zu bestimmen, und
wobei mindestens einer der mehreren Abstände (L1-L8) zum Referenzieren mit dem ermittelten Referenz-Abstand (LO) verwendet wird.

7. Verfahren nach Anspruch 6,
wobei aus den mehreren Abständen ein Abstand abhängig von einer aktuellen Geschwindigkeit ausgewählt und zum Referenzieren mit dem ermittelten Referenz-Abstand verwendet wird, vorzugsweise wobei die aktuelle Geschwindigkeit eine aktuelle Fahrgeschwindigkeit der Verteilmaschine oder eine aktuelle Bewegungsgeschwindigkeit der Sensorvorrichtung ist.

8. Verfahren nach Anspruch 7,
wobei die Auswahl des Abstands abhängig von der aktuellen Geschwindigkeit derart erfolgt, dass je höher die aktuelle Geschwindigkeit ist, desto weiter beabstandet zur Referenz-Messstelle die Messstelle des ausgewählten Abstands ist; und/oder
dass s *≥ v* t,* wobei s einer Entfernung in Fahrtrichtung der Messstelle des ausgewählten Abstands vom Verteilgestänge, *v* der aktuellen Geschwindigkeit und *t* einer Reaktionszeit der Verteilmaschine zur Höhenverstellung entspricht.

9. Verfahren nach einem der Ansprüche 5 bis 8,
wobei der Abstand und der Referenzabstand mittels des gleichen Sensors der Sensorvorrichtung (20), vorzugsweise mittels eines Radarsensors erfasst werden, oder
wobei der Abstand mittels eines Fernbereich-Sensors, vorzugsweise mittels eines Radarsensors, und der Referenz-Abstand mittels eines Nahbereich-Sensors, vorzugsweise mittels eines Ultraschallsensors, erfasst werden.

10. Verfahren nach einem der vorherigen Ansprüche,
wobei eine Längsneigung der Verteilmaschine zur Fahroberfläche und/oder zur Horizontalen ermittelt wird und bei der Ermittlung des Referenz-Abstands und/oder des Abstands des Verteilgestänges als Korrekturgröße berücksichtigt wird.

11. Verfahren nach Anspruch 10,
wobei die Längsneigung der Verteilmaschine mittels eines Neigungssensors erfasst und/oder mittels einer vertikalen oder im Wesentlichen vertikalen Abstandsmessung zur Zielfläche vor einer Vorderachse oder Zugdeichsel der Verteilmaschine und mittels einer weiteren vertikalen oder im Wesentlichen vertikalen Abstandsmessung zur Zielfläche hinter der Vorderachse oder hinter der Zugdeichsel der Verteilmaschine bestimmt wird; und/oder
wobei die Längsneigung zur Bestimmung einer Bergauf- oder Bergabfahrt und/oder zur Bestimmung von durch Bodenunebenheiten erzeugten Längsneigungen verwendet wird.

12. Verfahren zur Höhensteuerung eines Verteilgestänges (10) einer landwirtschaftlichen Verteilmaschine (1), beispielsweise einer Feldspritze oder eines pneumatischen Düngerstreuers, umfassend:
Ermitteln (S10) einer in Fahrtrichtung der Verteilmaschine vorausliegenden Geländekontur gemäß einem Verfahren der vorherigen Ansprüchen;
Ermitteln (S20), abhängig von der ermittelten Geländekontur, einer Sollkurve für die Höhensteuerung des Verteilgestänges, und
Ansteuern (S30) einer Stellvorrichtung des Verteilgestänges zur Höhensteuerung des Verteilgestänges gemäß der ermittelten Sollkurve.

13. Verfahren nach Anspruch 12,
wobei die anhand der vorausliegenden Geländekontur ermittelte Sollkurve für eine primäre, vorzugsweise initiale, Höhensteuerung des Verteilgestänges verwendet wird und der Referenz-Abstand anschließend für eine sekundäre Höhensteuerung als Nach- oder Feinsteuerung verwendet wird.

14. Verfahren nach einem der Ansprüche 12 oder 13,
wobei Zeitpunkte zum Ansteuern der Stellvorrichtung des Verteilgestänges (10) zur Höhensteuerung des Verteilgestänges (10) gemäß der ermittelten Sollkurve so festgelegt sind, vorzugsweise abhängig von einer Fahrgeschwindigkeit der Verteilmaschine (1), dass eine Reaktionszeit der Stellvorrichtung bei der Höhensteuerung zumindest teilweise kompensiert wird.

15. Verfahren nach einem der vorherigen Ansprüche,
- wobei der Referenz-Abstand (LO) ein, vorzugsweise zumindest streckenweise, im Wesentlichen konstanter Referenz-Abstand (LO) ist, und/oder
- wobei der Referenz-Abstand (LO) ein, vorzugsweise zumindest streckenweise, sich verändernder Referenz-Abstand (LO) ist, und/oder
- wobei das Referenzieren (S16) einen, vorzugsweise zumindest streckenweise, im Wesentlichen konstanten Referenz-Abstand (LO) umfasst und/oder auf einem, vorzugsweise zumindest streckenweise, im Wesentlichen konstanten Referenz-Abstand (LO) basiert, und/oder
- wobei das Referenzieren (S16) einen, vorzugsweise zumindest streckenweise, sich verändernden Referenz-Abstand (LO) umfasst und/oder auf einem, vorzugsweise zumindest streckenweise, sich verändernden Referenz-Abstand (LO) basiert.

16. Steuervorrichtung (100) zur Höhensteuerung eines Verteilgestänges (10) einer landwirtschaftlichen Verteilmaschine (1), die dazu ausgebildet ist, das Verfahren gemäß einem der vorherigen Ansprüche auszuführen.

17. Landwirtschaftliche Verteilmaschine (1), vorzugsweise eine Feldspritze oder ein pneumatischer Düngerstreuer, umfassend
ein Verteilgestänge (10) zum Ausbringen von Material, wie beispielsweise Düngemittel, Pflanzenschutzmittel oder Saatgut, umfassend ein Mittelteil und zwei seitliche Ausleger (11), die jeweils eine Mehrzahl von Ausbringelementen zum Ausbringen des Materials aufweisen;
eine ansteuerbare Stellvorrichtung (30) zur Veränderung einer Lage des Verteilgestänges (2) relativ zu einer zu bearbeitenden landwirtschaftlichen Zielfläche (Z);
eine Sensorvorrichtung (20) zur Erfassung des Referenz-Abstandes und des Abstandes zur Zielfläche; und
eine Steuervorrichtung (100) nach Anspruch 16.
